# NEUE EUROPÄISCHE PATENTSCHRIFT

(11) **EP 1 217 269 B2**
(45) Veröffentlichungstag und Bekanntmachung des Hinweises auf die Entscheidung über den Einspruch: **16.12.2009**
(45) Hinweis auf die Patenterteilung: 19.01.2005
(21) Anmeldenummer: 01129671.2
(22) Anmeldetag: 13.12.2001
(51) Int. Cl.: F16J 15/32

(54) **Lippendichtring**
Lipped sealing ring
Joint à lèvres

(30) Priorität: 20.12.2000 DE 10063970
(43) Veröffentlichungstag der Anmeldung: 26.06.2002
(73) Patentinhaber: Carl Freudenberg KG, 69469 Weinheim (DE)
(72) Erfinder: Lutaud, Dominique, 52360 Orbigny au Mont (FR)

(56) Entgegenhaltungen:
- DD-A1- 221 077
- DD-A7- 299 132
- DE- - 1 750 230
- DE- - 2 930 462
- DE-A1- 3 644 795
- DE-A1- 19 515 094
- DE-C1- 4 019 074
- DE-C1- 19 653 055
- US-A- 5 755 444
- 'Stichwort "Stearin", Römpp LexiKon, Version 2.0, Stuttgart/New York:Georg Thieme Verlag 1999'
- '"Paraffinic sludge reduction in crude oil storage tanks through the use of shearing and resuspension",Acta Montanistica Slovaca, 2004, 9, 3, S. 184-188 (nachveröffentlicht)'
- 'Produkteliste "Kusumoto Chemicals' Thixotropic agents", http://www.kusumoto.co.jp/kc_e/ tec_news_e/tec_pdf/performance.pdf (öffentlich zugänglich mindestens am 17.Octobre 2005,nachveröffentlicht)'
- 'Stichwort "Kieselgele", Römpp Lexikon, version 2.0, Stuttgart/New York:Georg Thieme Verlag 1999'

## Beschreibung

Die Erfindung betrifft einen Lippendichtring für ein relativ bewegbares Maschinenelement, umfassend eine flexible Dichtlippe aus polymerem Werkstoff, die das Maschinenelement im Bereich eines Dichtspalts unter einer elastischen Vorspannung anliegend umschließt, wobei der Dichtspalt an zumindest einer Umfangsstelle von einer Drallstufe in Längsrichtung durchdrungen ist, wobei die Drallstufe durch eine schraubengangförmige Nut in der Dichtlippe und die der Nut zugewandte abzudichtenden Oberfläche des Maschinenelements begrenzt ist und wobei die Nut den abzudichtenden Raum mit der Umgebung verbindet.

### Stand der Technik

Ein solcher Lippendichtring ist aus der DE 195 32 701 C2 bekannt. Der Dichtspalt ist zumindest im Bereich der die Drallstufe begrenzenden Nut durch ein Wachs verschlossen.

### Darstellung der Erfindung

Der Erfindung liegt die Aufgabe zugrunde, einen Lippendichtring der eingangs genannten Art derart weiterzuentwickeln, dass das Medium, das die Nut verschließt, einfacher und daher kostengünstig eingebracht werden kann und dass der Dichtspalt unabhängig von den Umgebungstemperaturen, die während einer Druckprüfung herrschen, sicher verschlossen ist.

Diese Aufgabe wird erfindungsgemäß mit den Merkmalen des Ansprüchs 1 gelöst. Auf vorteilhafte Ausgestaltungen nehmen die darauf rückbezogenen Unteransprüche Bezug.

Zur Lösung der Aufgabe ist es vorgesehen, dass der Dichtspalt im Bereich der die Drallstufe begrenzenden Nut durch ein thixotropes Medium verschlossen ist wobei das thixotrope Medium durch ein Schmieröl gebildet ist, mit einem zusatz von Siliciumverbindungen. Hierbei ist von Vorteil, dass die Umgebungstemperatur, mit der das Medium während einer Druckprüfung beaufschlagt ist, keinen Einfluss auf die Viskosität des Mediums hat und dass das Medium deshalb auch bei vergleichsweise hohen Temperaturen sicher innerhalb der Nut gehalten ist.

Nach der Montage des Lippendichtrings auf dem Außenumfang eines Maschinenelements, beispielsweise einer rotationssymmetrischen Welle, ergibt sich durch die Nut eine kanalförmige Ausnehmung, die den abzudichtenden Raum mit der Umgebung verbindet und den Zweck hat, den Dichtspalt passierende Leckflüssigkeit durch sich bei rotierender Welle ergebende, hydrodynamische Kräfte in den abzudichtenden Raum zurückzufördern. Die Drallstufe ist dabei derart gestaltet, dass Leckflüssigkeit bei rotierender Welle in Richtung des abzudichtenden Raums zurückgefördert wird, beispielsweise dadurch, dass die Drallstufe mit der Rotationsachse der Welle einen spitzen Winkel einschließt,

Lippendichtringe werden in vielen Fällen unter Verwendung von automatischen Montageeinrichtungen montiert. Dabei kann es vorkommen, dass sich die Dichtlippe durch unvorhersehbare Einflüsse axial in die falsche Richtung umstülpt und/oder beschädigt wird. Sowohl durch eine in die falsche Richtung umgestülpte Dichtlippe als auch durch eine beschädigte Dichtlippe lässt sich kein zufriedenstellendes Abdichtungsergebnis erzielen. Es ist daher erforderlich, Lippendichtringe im Anschluss an ihre Montage daraufhin zu überprüfen, ob die Montage korrekt durchgeführt wurde und/oder die Dichtlippe unbeschädigt ist. Insbesondere in Einbaupositionen, in denen die Einbaustelle schwer einzusehen ist, ist das auf manuellem Wege schwierig. Es ist daher üblich, den abzudichtenden Raum im Anschluss an die Montage des Lippendichtrings mit Druckluft eines vorgegebenen Kontrolldrucks zu füllen und den Druckabfall während einer bestimmten Zeitspanne zu beobachten. Ergibt sich ein ungewöhnlich schneller Druckabfall, so ist das ein sicheres Zeichen dafür, dass die Dichtlippe fehlerhaft montiert und/oder beschädigt ist.

Um auch Dichtlippen überprüfen zu können, die auf der dem abzudichtenden Maschinenelement zugewandten Seite eine schraubengangförmig ausgebildete Nut aufweisen, die den abzudichtenden Raum mit der Umgebung verbindet, ist es erforderlich, die Nut nur während der Druckprüfung zu verschließen.

Da die Druckprüfung nicht immer bei Zimmertemperatur erfolgt, sondern auch in Temperaturbereichen, in den Wachs zu schmelzen beginnt, sind thixotrope Medien vorteilhaft. Thixotrope Medien werden auch dann sicher in der Nut gehalten, wenn beispielsweise die Umgebungstemperatur während der Druckprüfung über der Schmelztemperatur von Wachsen liegt. Die Schmelztemperatur von Wachsen beträgt im allgemeinen 50 bis 90°C.

Wenn in Umfangsrichtung mehrere aufeinander folgende Drallstufen vorgesehen sind oder eine sinusförmig verlaufende Drallstufe den Dichtspalt in Umfangsrichtung mehrfach berührt oder durchschneidet, ist es erforderlich, jede in Umfangsrichtung vorhandene Nut im Bereich von Drallstufe bzw. jede weitere Unterbrechung des Dichtspalts durch ein oder dieselbe Drallstufe durch das thixotrope Medium zu verschließen. Unabhängig von der Anzahl der vorhandenen Drallstufen wird auf diese Weise während der Durchführung der Druckprüfung stets ein hermetischer Abschluss des abzudichtenden Raums im Bereich des Dichtspalts erreicht.

Die Siliciumverbindungen können beispielsweise durch Kieselerde gebildet sein. Hierbei ist von Vorteil, dass das thixotrope Medium besonders umweltverträglich ist und daher im Anschluss an die Druckprüfung nicht separat entsorgt werden muss. Nach erfolgreich abgeschlossener Druckprüfung wird das abzudichtende Maschinenelement in seine bestimmungsgemäße Bewegung versetzt, wobei sich das Medium in Folge der Wellendrehung und/oder der entstehenden Vibrationen verflüssigt und durch die Förderwirkung der Nut in den abzudichtenden Raum gepumpt wird. Anschließend ist die Nut frei und zur Rückförderung des abzudichtenden Mediums in den abzudichtenden Raum vollständig wirksam.

Thixotrope Medien sind speziell dann wenn die Basis ein Schmieröl bildet, das Kieselerde enthält, mit den meisten abzudichtenden Medien sehr gut verträglich, so dass die Gebrauchseigenschaften des abzudichtenden Mediums nach dem Vermischen mit dem thixotropen Medium nicht nachteilig beeinflusst werden.

Das thixotrope Medium kann eine von der Dichtlippe abweichende Farbe aufweisen. Hierbei ist von Vorteil, dass eine gegebenenfalls optische Kontrolle besonders einfach möglich ist. Es ist leicht zu erkennen, ob die Dichtlippe im Bereich der Drallstufe vollständig und/oder gleichmäßig mit dem thixotropen Medium beschichtet ist. Vorzugsweise enthält das Medium einen Farbstoff mit UV-Indikator, der unter UV-Licht hell aufleuchtet.

Die Dichtlippe kann beispielsweise aus PTFE bestehen. Unter PTFE werden in diesem Zusammenhang auch PTFE-Compounds verstanden. Für viele Anwendungsfälle haben sich Dichtlippen aus PTFE als vorteilhaft bewährt, da ihre Oberflächen nach einem gewissen, minimalen Anfangsverschleiß glasieren und anschließend während einer sehr langen Gebrauchsdauer gleichbleibend gute Gebrauchseigenschaften aufweisen.

Im Anschluss an die Verfestigung des thixotropen Mediums kann der Lippendichtring gelagert, transportiert und eingebaut werden, wobei die Umgebungstemperatur keinen Einfluss auf die Viskosität des thixotropen Mediums hat.

Der Gegenstand der Erfindung wird nachfolgend durch die als Anlage beigefügten Zeichnungen weiter verdeutlicht.

Es zeigen:

### Kurzbeschreibung der Zeichnungen

- Fig. 1: ein Lippendichtring der erfindungsgemäßen Art in geschnittener Darstellung,

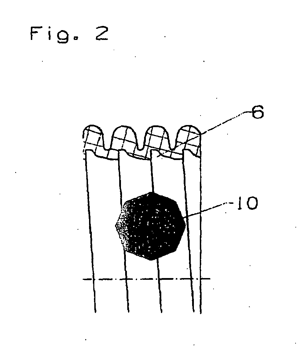

- Fig. 2: einen Ausschnitt aus der Dichtlippe des Lippendichtrings gemäß Fig. 1 auf der dem Maschinenelement zugewandten Seite in vergrößerter Darstellung.

### Ausführung der Erfindung

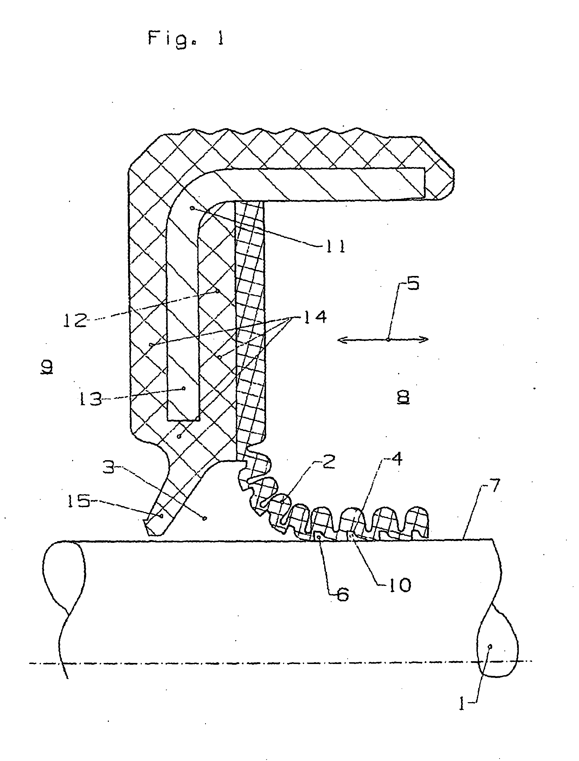

Der in Fig. 1 im Längsschnitt dargestellte Lippendichtring ist für ein relativ bewegbares Maschinenteil 1 bestimmt, beispielsweise für eine um eine Rotationsachse rotierende Welle. Der Lippendichtring umfasst eine flexible Dichtlippe 2, die in diesem Ausführungsbeispiel aus PTFE-Compound besteht. In dem hier gezeigten Ausführungsbeispiel ist die Dichtlippe 2 axial in Richtung des abzudichtenden Raums 8 nach Art des Schalltrichters einer Trompete vorgewölbt und berührt die abzudichtende Oberfläche 7 des Maschinenelements 1. Im Bereich des größten Durchmessers der Dichtlippe 2 ist diese an einem Stützring 11 mittelbar oder unmittelbar befestigt, beispielsweise dadurch, dass die Dichtlippe 2 mittels einer Gummispur 12 am Stützring 11 befestigt ist.

Der Stützring 11 ist im Bereich seines Radialvorsprungs 13 in eine Umhüllung 14 aus Gummi eingebettet, welche die Oberfläche 7 des Maschinenelements 1 auf der der Umgebung 9 zugewandten Seite mit einer umlaufenden Staublippe 15 anliegend berührt. Die Dichtlippe 2 ist im Bereich des Dichtspalts 3 mit einer die Oberfläche 7 des Maschinenelements 1 vollständig umschließenden schraubengangförmigen Drallstufe 4 versehen, wobei die Drallstufe 4 durch die schraubengangförmige Nut 6 und die Oberfläche 7 des Maschinenelements 1 begrenzt ist. Die Drallstufe 4 ist derart ausgeführt, dass sich bei rotierendem Maschinenelement 1 im Bereich der Drallstufe 4 eine Förderwirkung in Richtung des abzudichtenden Raums 8 ergibt.

In diesem Ausführungsbeispiel ist die Dichtlippe 2 mit nur einer einzigen Drallstufe 4 versehen, die das abzudichtende Maschinenelement 1 nach Art einer Spirale auf seinem gesamten Außenumfang umschließt. Zum Verhindern von Druckverlusten bei einer Druckprüfung durch die die Drallstufe 4 begrenzende Nut 6, ist es daher ausreichend, wenn die Drallstufe 4 an einer einzigen Umfangsstelle durch das thixotrope Medium 10 verschlossen ist. Die Menge des thixotropen Mediums 10 muss so bemessen sein, dass der Dichtspalt 3 durch das thixotrope Medium 10 völlig verschlossen ist. Wird im Anschluss an die Montage des Lippendichtrings auf dem Maschinenelement 1 eine Druckprüfung vorgenommen, dann wird die Dichtlippe 2 durch den im abzudichtenden Raum 8 ansteigenden Druck an die Oberfläche 7 des Maschinenelements 1 verstärkt angepresst, was die Abdichtwirkung erhöht. Im Bereich der Drallstufe 4 kann keinerlei Druckgas entweichen. Der Gasdruck bleibt bei unbeschädigtem und korrekt montiertem Lippendichtring während der Druckprüfung weitgehend konstant erhalten.
Demgegenüber käme es zu einem vergleichsweise raschen Druckverlust, wenn der Lippendichtring beschädigt und/oder fehlerhaft eingebaut wäre.

Während der bestimmungsgemäßen Verwendung findet eine Relativbewegung zwischen der Dichtlippe 2 und der Oberfläche 7 des relativ rotierenden Maschinenelements 1 statt, wobei durch die Relativbewegung des Maschinenelements 1 auch Vibrationen entstehen. Das den Dichtspalt 3 verschließende thixotrope Medium 10 wird dadurch verflüssigt und in Richtung des abzudichtenden Raums 8 gefördert. Die Drallstufe 4 kann dadurch anschließend voll dem Zweck gerecht werden, für den sie vorgesehen ist, nämlich die Rückförderung von Leckflüssigkeit in den abzudichtenden Raum 8.

## Patentansprüche

1. Lippendichtring für ein relativ bewegbares Maschinenelement (1), umfassend eine flexible Dichtlippe (2) aus polymerem Werkstoff, die in montiertem Zustand das Maschinenelement (1) im Bereich eines Dichtspalts (3) unter einer elastischen Vorspannung anliegend umschließt, wobei der Dichtspalt (3) an zumindest einer Umfangsstelle von einer Drallstufe (4) in Längsrichtung durchdrungen ist, wobei die Drallstufe (4) durch eine schraubengangförmige Nut (6) in der Dichtlippe (2) und die in montiertem Zustand der Nut (6) zugewandte abzudichtende Oberfläche (7) des Maschinenelements (1) begrenzt ist und wobei die Nut (6) den abzudichtenden Raum mit der Umgebung verbindet, **dadurch gekennzeichnet, dass** der Dichtspalt (3) im Bereich der die Drallstufe (4) begrenzenden Nut (6) durch ein thixotropes Medium (10) verschlossen ist, wobei das thixotrope Medium (10) durch ein Schmieröl gebildet ist, mit einem Zusatz von Siliciumverblndungen.

2. Lippendichtring nach Anspruch 1, **dadurch gekennzeichnet, dass** die Siliciurnverbindungen durch Kieselerde gebildet sind.

3. Lippendichtring nach Anspruch 1 oder 2, **dadurch gekennzeichnet, dass** das thixotrope Medium (10) eine von der Dichtlippe (2) abweichende Farbe aufweist.

4. Lippendichtring nach einem der Ansprüche 1 bis 3, **dadurch gekennzeichnet, dass** die Dichtlippe (2) aus PTFE besteht.

## Claims

1. Lip sealing ring for a relatively movable machine element (1), comprising a flexible sealing lip (2) made of polymeric material, which in the fitted state adjacently encloses the machine element (1) in the region of a sealing gap (3) under elastic prestressing, the sealing gap (3) being penetrated in the longitudinal direction in at least one circumferential location by a spiral stage (4), the spiral stage (4) being bounded by a helical groove (6) in the sealing lip (2) and by the surface (7) of the machine element (1) that is to be sealed, facing the groove (6) in the fitted state, and the groove (6) connecting the space that is to be sealed to the surroundings, **characterized in that** the sealing gap (3) is sealed in the region of the groove (6) bounding the spiral stage (4) by a thixotropic medium (10), the thixotropic medium (10) being formed by a lubricating oil, with added silicon compounds.

2. Lip sealing ring according to Claim 1, **characterized in that** the silicon compounds are formed by silica.

3. Lip sealing ring according to Claim 1 or 2, **characterized in that** the thixotropic medium (10) is of a colour different from the sealing lip (2).

4. Lip sealing ring according to one of Claims 1 to 3, **characterized in that** the sealing lip (2) consists of PTFE.

## Revendications

1. Joint à lèvre pour un élément de machine (1) en mouvement relatif, comprenant une lèvre d'étanchéité flexible (2) en un matériau polymère, qui dans l'état monté entoure l'élément de machine (1) dans la région d'une fente d'étanchéité (3) en s'y appliquant avec une précontrainte élastique, dans lequel la fente d'étanchéité (3) est traversée en direction longitudinale en au moins un point de la périphérie par un étage de turbulence (4), dans lequel l'étage de turbulence (4) est limité par une rainure (6) en forme de pas de vis dans la lèvre d'étanchéité (2) et la surface (7) de l'élément de machine (1) à rendre étanche tournée vers la rainure (6) dans l'état monté, et dans lequel la rainure (6) relie l'espace à rendre étanche avec l'ambiance, **caractérisé en ce que** la fente d'étanchéité (3) est fermée dans la région de la rainure (6) limitant l'étage de turbulence (4) par un fluide thixotrope (10), le fluide thixotrope (10) étant formé par une huile lubrifiante, avec un ajout de composés de silicium.

2. Joint à lèvre selon la revendication 1, **caractérisé en ce que** les composés de silicium sont formés par de la silice.

3. Joint à lèvre selon la revendication 1 ou 2, **caractérisé en que** le fluide thixotrope (10) présente une couleur différente de la lèvre d'étanchéité (2).

4. Joint à lèvre selon l'une quelconque des revendications 1 à 3, **caractérisé en ce que** la lèvre d'étanchéité (2) se compose de PTFE.
